# EUROPEAN PATENT APPLICATION

(11) **EP 1 545 111 A1**
(43) Date of publication of application: **22.06.2005**
(21) Application number: 03798477.0
(22) Date of filing: 25.09.2003
(51) Int. Cl.: H04M 3/56, H04M 3/42, H04N 7/15

(54) **TELEPHONE INTERPRETATION AID DEVICE AND TELEPHONE INTERPRETATION SYSTEM USING THE SAME**

(30) Priority: 27.09.2002 JP 2002282882
(71) Applicant: Ginganet Corporation, Osaka-shi, Osaka 556-0017 (JP)
(72) Inventor: SAHASHI, Nozomu, Osaka 596-0045 (JP)
(74) Representative: Schoppe, Fritz, Dipl.-Ing.
(86) International application number: PCT/JP2003/012193
(87) International publication number: WO 2004/030330

(57) **Abstract**

A telephone interpretation assistance device makes it possible, in telephone interpretation when persons who speak different languages meet each other, that an interpreter interprets the speech of a speaker in progress simultaneously without interrupting the speech of the speaker or mixing up the conversation, thereby allowing quick and precise interpretation. The telephone interpretation assistance device (10) comprises: a headset connection jack (16) intended for an interpretee; a headset connection jack (17) intended for a conversation partner; a telephone connection jack (18); a synthesis circuit (12) for synthesizing voice signals input from the respective headset connection jacks, and outputting the resultant to the telephone connection jack; a detection circuit (15) for detecting a switch signal from a voice signal input from the telephone connection jack; and a switching circuit (14) for outputting the voice signal input from the telephone connection jack to designated one of the headset connection jacks based on the switch signal detected. Telephone interpretation services are provided by using a telephone interpretation system (100) using the telephone interpretation assistance device. Bidirectional simultaneous interpretation services are provided by using the telephone interpretation assistance device (20, 30) and the telephone interpretation system (200).

## Description

### TECHNICAL FIELD

The invention relates to a telephone interpretation assistance device to be used for the sake of interpretation services by phone when persons who speak different languages meet each other, and a telephone interpretation system for providing interpretation services by using the same. In particular, the invention relates to a telephone interpretation assistance device suited to holding conversations with foreigners who speak different languages, such as on overseas trips and at overseas business occasions, and a telephone interpretation system using the same.

### BACKGROUND ART

Among conventional interpretation systems for providing telephone-based interpretation services at meetings of persons who speak different languages are ones disclosed in Japanese Patent Laid-Open Publications No. H10-32893 and No. 2002-73783, for example.

In those systems, microphones or earphone-microphones of branch type are plugged into a voice input jack of the telephone terminal of a person to be interpreted (hereinafter, referred to as interpretee). One and the other of the microphones are worn by the interpretee and his/her conversation partner when an interpretation center is called from the telephone terminal so that the interpretee, the conversation partner, and the interpreter in the interpretation center can hold a three-party talk. As a result, the interpreter in the interpretation center can listen to the speeches of the interpretee and the conversation partner, and the interpretee and the conversation partner can listen to the voice of the interpreter. Thus, when the interpreter listens to the speech of the interpretee and interprets it into the language of the conversation partner, and listens to the speech of the conversation partner and interprets it into the language of the interpretee, the interpretee and the conversation partner who speak different languages can hold a conversation.

To use such interpretation services on overseas trips and at overseas business occasions, the interpretee preferably carries a cellular phone and branch-type headsets connectable to the voice input jack of the cellular phone. When interpretation is needed, an interpretation center is called for interpretation services. In this case, the interpretee can call, from the cellular phone, an interpretation center in his/her own country and receive interpretation services. Moreover, if interpretation centers are provided in various countries and made available in respective national languages, the interpretee can also call an interpretation center in that destination and receive interpretation services. It is understood that the interpretee can use the interpretation services when he/she meets a foreigner in his/her own country.

In such conventional interpretation systems, however, the voice of the interpreter is transmitted to both the interpretee and the conversation partner. There has thus been the problem that when the interpreter interprets the speech of a speaker simultaneously, the voice of the interpreter can even reach the speaker and interrupt the speech. In particular, conversations might be mixed up when the conversations deal with common topics not related to the languages, or contain addresses and the like to the other parties.

For this reason, in the conventional interpretation systems, the interpreter awaits the completion of the speech of the interpretee before interpretation. The conversation partner then awaits the completion of the interpretation by the interpreter before speech. The interpreter awaits the completion of the speech of the conversation partner before interpretation. Since such a procedure must be repeated, it has been difficult to conduct quick and precise interpretation.

It is thus a chief object of the present invention to makes it possible, in telephone interpretation when persons who speak different languages meet each other, that an interpreter interprets the speech of a speaker in progress simultaneously without interrupting the speech of the speaker or mixing up the conversation, thereby allowing quick and precise interpretation.

### DISCLOSURE OF THE INVENTION

A telephone interpretation assistance device according to claim 1 comprises: headset connection jacks to which headsets to be used by an interpretee and a conversation partner who speak different languages are connected, respectively; a telephone connection jack to which a telephone terminal for holding a call with an interpreter is connected; synthesis means for synthesizing voice signals input from the respective headset connection jacks, and outputting the resultant to the telephone connection jack; detection means for detecting a switch signal from a voice signal input from the telephone connection jack; and switching means for outputting the voice signal input from the telephone connection jack to designated one of the headset connection jacks based on the switch signal detected by the detection means.

Consequently, the voice of the interpreter is transmitted by the switching means to either one of the interpretee and the conversation partner which is designated by the interpreter from his/her terminal. Thus, the interpreter can conduct simultaneous interpretation while a speaker is speaking, without interrupting the speech of the speaker or mixing up the conversation. This allows quick and precise interpretation.

A telephone interpretation assistance device according to claim 2 is the telephone interpretation assistance device according to claim 1, wherein the synthesis means to perform multiplexing the voice of the interpretee and the voice of the conversation partner.

Consequently, when the interpreter terminal has a demultiplexing function, the interpreter can listen to the voice of the interpretee and the voice of the conversation partner separately, and can recognize the targets of interpretation clearly. It is therefore possible to avoid a mix-up in conversation, thereby allowing quicker and more precise interpretation.

A telephone interpretation system according to claim 3 is one for providing a telephone interpretation service by using the telephone interpretation assistance device according to claim 1 or 2, comprising: connecting means for connecting an interpretee terminal and an interpreter terminal; and communication means for conducting voice communications between the terminals connected by the connecting means. The connecting means has an interpreter registration table containing at least the language types possible for interpreters to interpret and terminal numbers of the interpreters. The telephone interpretation system has functions of: accepting a call from the interpretee terminal; acquiring the language type of the interpretee and the language type of the conversation partner from the interpretee terminal of which the call is accepted; extracting the terminal number of an interpreter by referencing the interpreter registration table based on the language type of the interpretee and the language type of the conversation partner acquired; and calling the interpreter terminal by using the extracted terminal number of the interpreter.

Consequently, the terminal number of the interpreter who can interpret the language of the interpretee and the language of the conversation partner is extracted from the interpreter registration table based on the call from the interpretee terminal. Then, the interpretee terminal and the interpreter terminal are connected automatically. The interpretee can thus receive telephone interpretation services easily by using the telephone interpretation assistance device and calling the interpretation center.

A telephone interpretation system according to claim 4 is the telephone interpretation system according to claim 3, wherein the communication means has functions of: recording the voice from the interpretee terminal and the voice from the interpreter terminal; and reproducing and transmitting the recorded voices by request from the terminals.

Consequently, the voices of the interpretee, the conversation partner, and the interpreter are recorded during interpretation services, and the recorded contents can be checked by request from the terminals. It is therefore possible to check again what was unclear at the scene, and examine the details of the interpretation services later.

For voice recording, the voice to be transmitted to the interpretee terminal and the voice to be transmitted to the interpreter terminal may be recorded in an voice multiplexing fashion. Consequently, in terminals having an voice demultiplexing function, the voice transmitted to the interpretee terminal and the voice transmitted to the interpreter terminal can be checked separately for the contents.

The telephone interpretation system may also comprise: separation means for separating the voice signal input from the interpretee terminal into the voice of the interpretee and the voice of the conversation partner; detection means for detecting the switch signal from the voice signal input from the interpreter terminal; and switching means for switching the destination of the voice signal input from the interpreter terminal between the interpretee and the conversation partner based on the switch signal detected by the detection means. Here, the voice of the interpretee synthesized with the voice bound for the interpretee and the voice of the conversation partner synthesized with the voice bound for the conversation partner may be recorded separately. The telephone interpretation system then reproduces and transmits the voice of a side designated by an command from a terminal. Consequently, even in terminals not having the voice demultiplexing function, the language of the interpretee and the language of the conversation partner can be checked separately for the contents.

A telephone interpretation assistance device according to claim 5 is one for conducting telephone interpretation with bidirectional simultaneous interpretation, comprising an interpretee telephone interpretation assistance device and an interpreter telephone interpretation assistance device. The interpretee telephone interpretation assistance device comprises: an interpretee headset connection jack to which a headset to be used by an interpretee is connected; a conversation partner headset connection jack to which a headset to be used by a conversation partner is connected; a telephone connection jack to which a telephone terminal for holding a call with an interpreter is connected; synthesis means for multiplexing a voice signal input from the interpretee headset connection jack as the first channel and a voice signal input from the conversation partner headset connection jack as the second channel, and outputting the resultant to the telephone connection jack; and separation means for demultiplexing a voice signal input from the telephone connection jack, and outputting the first channel of the resultant to the interpretee headset connection jack and the second signal of the resultant to the conversation partner headset connection jack. The interpreter telephone interpretation assistance device comprises: a first interpreter headset connection jack to which a headset to be used by a first interpreter who interprets the language of the conversation partner into the language of the interpretee is connected; a second interpreter headset connection jack to which a headset to be used by a second interpreter who interprets the language of the interpretee into the language of the conversation partner is connected; a telephone connection jack to which a telephone terminal for holding a call with the interpretee is connected; separation means for demultiplexing a voice signal input from the telephone connection jack, and outputting the first channel of the resultant to the second interpreter headset connection jack and the second channel of the resultant to the first interpreter headset connection jack; and synthesis means for multiplexing a voice signal input from the first interpreter headset connection jack as the first channel and a voice signal input from the second interpreter headset connection jack as the second channel, and outputting the resultant to the telephone connection jack.

Consequently, the voice input from the headset of the interpretee is output to the headset of the second interpreter. The voice input from the headset of the second interpreter is output to the headset of the conversation partner. The voice input from the headset of the conversation partner is output to the headset of the first interpreter. The voice input from the headset of the first interpreter is output to the headset of the interpretee. As a result, the voice of the first interpreter is transmitted only to the interpretee, the voice of the second interpreter is transmitted only to the conversation partner, the voice of the conversation partner is transmitted only to the first interpreter, and the voice of the interpretee is transmitted only to the second interpreter. The interpreters can thus conduct simultaneous interpretation while the speakers are speaking, without interrupting the speeches of the speakers or mixing up the conversation. This allows quick and precise conversation with bidirectional simultaneous interpretation.

A telephone interpretation system according to claim 6 is one for providing a bidirectional telephone interpretation service by using a caller-side telephone interpretation assistance device comprising: an interpretee headset connection jack to which a headset to be used by an interpretee is connected; a conversation partner headset connection jack to which a headset to be used by a conversation partner is connected; a telephone connection jack to which a telephone terminal for holding a call with an interpreter is connected; synthesis mans for multiplexing a voice signal input from the interpretee headset connection jack as the first channel and a voice signal input from the conversation partner headset connection jack as the second channel, and outputting the resultant to the telephone connection jack; and separation means for demultiplexing a voice signal input from the telephone connection jack, and outputting the first channel of the resultant to the interpretee headset connection jack and the second channel of the resultant to conversation partner headset connection jack. The telephone interpretation system comprises: connecting means for establishing connection among an interpretee terminal, a first interpreter terminal to be used by a first interpreter who interprets the language of the conversation partner into the language of the interpretee, and a second interpreter terminal to be used by a second interpreter who interprets the language of the interpretee into the language of the conversation partner; and communication means for conducting voice communications among the terminals connected by the connecting means. The communication means has a separation function for demultiplexing a voice signal from the interpretee terminal, and transmitting the first channel of the resultant to the second interpreter terminal and the second channel of the resultant to the first interpreter terminal, and a synthesis function of multiplexing a voice signal from the first interpreter terminal as the first channel and a voice signal from the second interpreter terminal as a second channel, and transmitting the resultant to the interpretee terminal.

Consequently, the voice input from the headset of the interpretee is output to the second interpreter terminal. The voice input from the headset of the conversation partner is output to the first interpreter terminal. The voice input from the first interpreter terminal is output to the headset of the interpretee. The voice input from the second interpreter terminal is output to the headset of the conversation partner. As a result, the voice of the first interpreter is transmitted only to the interpretee, the voice of the second interpreter is transmitted only to the conversation partner, the voice of the conversation partner is transmitted only to the first interpreter, and the voice of the interpretee is transmitted only to the second interpreter. The interpreters can thus conduct simultaneous interpretation while the speakers are speaking, without interrupting the speeches of the speakers or mixing up the conversation. This allows quick and precise conversation with bidirectional simultaneous interpretation.

A telephone interpretation system according to claim 7 is the telephone interpretation system according to claim 6, wherein the connecting means has an interpreter registration table containing at least the language types possible for interpreters to interpret and terminal numbers of the interpreters. The telephone interpretation system has functions of: accepting a call from the interpretee terminal; acquiring the language type of the interpretee and the language type of the conversation partner from the interpretee terminal of which the call is accepted; extracting the terminal number of the first interpreter by referencing the interpreter registration table based on the language type of the conversation partner and the language type of the interpretee acquired; calling the first interpreter terminal by using the extracted terminal number of the first interpreter; extracting the terminal number of the second interpreter by referencing the interpreter registration table based on the language type of the interpretee and the language type of the conversation partner acquired; and calling the second interpreter terminal by using the extracted terminal number of the second interpreter.

Consequently, based on a call from the interpretee terminal, the terminal numbers of the first interpreter who interprets the language of the conversation partner into the language of the interpretee and the second interpreter who interprets the language of the interpretee into the language of the conversation partner are extracted from the interpreter registration table. Then, the interpretee terminal, the first interpreter terminal, and the second interpreter terminal are connected automatically. The interpretee can thus receive the telephone interpretation services with bidirectional simultaneous interpretation easily by using the telephone interpretation assistance device and calling the interpretation center.

A telephone interpretation system according to claim 8 is the telephone interpretation system according to claim 6 or 7, wherein the communication means has functions of: recording the voice from the interpretee terminal, the voice from the first interpreter terminal, and the voice from the second interpreter terminal; and reproducing and transmitting the recorded voices by request from the terminals.

Consequently, the voices of the interpretee, the conversation partner, the first interpreter, and the second interpreter are recorded during interpretation services, and the recorded contents can be checked by request from the terminals. It is therefore possible to check again what was unclear at the scene, and examine the details of the interpretation services later.

A telephone interpretation system according to claim 9 is the telephone interpretation system according to any one of claims 3, 4, 7, and 8, wherein: the interpreter registration table contains selection information for selecting interpreters; and the connecting means has functions of acquiring an interpreter selection condition from the interpretee terminal, and extracting the terminal number of an appropriate interpreter by referencing the interpreter registration table based on the interpreter selection condition acquired.

This makes it possible to select an interpreter suited to the purpose of the meeting between the interpretee and the conversation partner, out of those who are registered in the interpreter registration table. The selection information for selecting interpreters includes information on gender, age, residence, the fields of specialization, qualifications, etc.

If the interpreter registration table contains the language-specific interpretation levels of the interpreters, users can select interpreters of levels desirable for interpretation between intended languages. Meanwhile, the interpreters can register for a number of languages they speak. This allows flexible, efficient selection of interpreters.

For the telephone interpretation system with bidirectional simultaneous interpretation, the levels of listening comprehension and those of speaking abilities may be registered separately as the language-specific interpretation levels in the interpreter registration table. This makes it possible to select persons the most suitable for the first interpreter and the second interpreter individually, allowing more flexible efficient selection of interpreters.

A telephone interpretation system according to claim 10 is the telephone interpretation system according to any one of claims 3, 4, 7, 8, and 9, wherein: the interpreter registration table contains availability flags for indicating whether or not the interpreters are available; and the connecting means has a function of extracting the terminal number of an available interpreter by referencing the availability flags in the interpreter registration table.

The interpreters can thus register their availabilities into the interpreter registration table so that available interpreters are automatically selected and called. This can preclude needless calls, and provide more flexible and efficient telephone interpretation services.

A telephone interpretation system according to claim 11 is the telephone interpretation system according to any one of claims 3, 4, 7, 8, 9, and 10, wherein: the interpreter registration table has a function of registering accounting information on the interpreters; and the connecting means has functions of measuring the time for the interpretee terminal to receive interpretation services, and calculating fees from the measured time and the accounting information registered in the interpreter registration table.

Since the interpreter registration table contains the accounting information on the interpreters, it is possible to charge proper fees for the telephone interpretation services.

Here, the interpreter registration table may contain the language-specific interpretation levels of the interpreters so that the accounting information is obtained by using an accounting table which defines the relationship between the interpretation levels and hourly rates. Consequently, it is possible to charge proper fees in accordance with the levels of the interpreters.

The above object, other objects, features, and advantages of the invention will become more apparent from the following detailed description of embodiments of the invention made in conjunction with the drawings.

### BRIEF DESCRIPTION OF THE DRAWINGS

Fig. 1 is a block diagram showing a telephone interpretation assistance device according to a first embodiment of the present invention;
Fig. 2 is a system block diagram showing a practical example of a telephone interpretation system using the telephone interpretation assistance device according to the first embodiment of the present invention;
Fig. 3 is a chart showing an example of an interpreter registration table in the telephone interpretation system of Fig. 2;
Fig. 4 is a process flowchart showing an example of connection processing of a control unit in the telephone interpretation system of Fig. 2;
Fig. 5 is a block diagram showing a telephone interpretation assistance device according to a second embodiment of the present invention;
Fig. 6 is a system block diagram showing a practical example of a telephone interpretation system using an interpretee telephone interpretation assistance device out of the telephone interpretation assistance device according to the second embodiment of the present invention;
Fig. 7 is a chart showing an example of an interpreter registration table in the telephone interpretation system of Fig. 6;
Fig. 8 is a process flowchart showing an example of connection processing of a control unit in the telephone interpretation system of Fig. 6;
Fig. 9 is a block diagram showing a practical example of a recording and reproducing function in the telephone interpretation system of Fig. 2; and
Fig. 10 is a block diagram showing a practical example of a recording and reproducing function in the telephone interpretation system of Fig. 6.

### BEST MODE FOR CARRYING OUT THE INVENTION

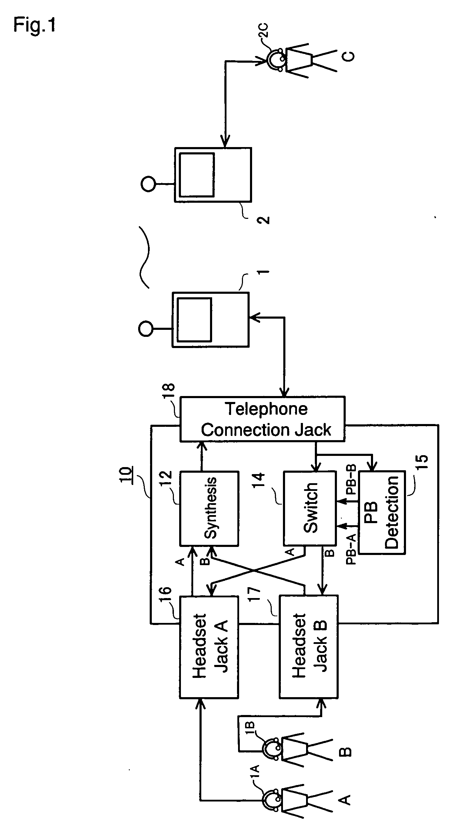

Fig. 1 is a block diagram showing a telephone interpretation assistance device according to a first embodiment of the present invention. In the diagram, the reference numeral 10 designates the telephone interpretation assistance device, which comprises a headset connection jack 16 to which a headset to be used by an interpretee A is connected, a headset connection jack 17 to which a headset to be used by a conversation partner B is connected, and a telephone connection jack 18 to which a telephone terminal 1 for holding a call with an interpreter is connected. The device further comprises a synthesis circuit 12 which synthesizes voice signals input from the two headsets connection jacks 16 and 17 and outputs the resultant to the telephone connection jack 18, a switching circuit 14 which switches and supplies a voice signal input from the telephone connection jack 18 to either one of the two headset connection jacks 16 and 17, and a detection circuit 15 which generates a switch signal from the voice signal input from the telephone connection jack 18.

The detection circuit 15 has the function of detecting a tone signal in the voice signal input from the telephone connection jack 18. When an interpreter C pushes a button on a telephone terminal 2 during the service, the detection circuit 15 detects the pushed number and sends the switch signal to the switching circuit 14. For example, suppose that a button "1" is to be pushed when the language of the conversation partner B is interpreted for the interpretee A, and a button "2" is to be pushed when the language of the interpretee A is interpreted for the conversation partner B. Then, the detection circuit 15 transmits a PB-A signal to the switching circuit 14 when it detects the tone signal of the button "1", and transmits a PB-B signal to the switching circuit 14 when it detects the tone signal of the button "2".

When the switching circuit 14 receives the PB-A signal from the detection circuit 15, it transmits the voice signal of the interpreter C, input from the telephone connection jack 18, to the headset connection jack 16 to which the headset of the interpretee A is connected. When the switching circuit 14 receives the PB-B signal from the detection circuit 15, it transmits the voice signal of the interpreter C, input from the telephone connection jack 18, to the headset connection jack 17 to which the headset of the conversation partner B is connected.

Since the voice of the interpretee A and the voice of the conversation partner B are synthesized by the synthesis circuit 12 and the resultant is transmitted to the interpreter C, the interpreter C can listen to the voices of the two from the telephone terminal 2. Moreover, the voice of the interpreter C is transmitted to the interpretee A when the interpreter pushes the button "1" before speech. The voice is transmitted to the conversation partner B when the interpreter pushes the button "2" before speech.

Consequently, while listening to the speech of the interpretee A, the interpreter C can conduct simultaneous interpretation and transmit the interpreting voice only to the conversation partner B. In addition, while listening to the speech of the conversation partner B, the interpreter C can conduct simultaneous interpretation and transmit the interpreting voice only to the interpretee A.

Thus, the voice of the interpreter is transmitted only to the destination of interpretation designated by the interpreter from the terminal, without interrupting the speech of the speaker. This can avoid a mix-up in conversation, allowing quick and precise interpretation.

Incidentally, the telephone interpretation assistance device 10 is connected with the telephone terminal 1 when receiving interpretation service, and any type of telephone terminal may be connected as long as it has external voice input and output functions. Nevertheless, in view of interpretation services on the move such as on overseas trips and at overseas business occasions, a radio cellular phone is preferable connected.

In the foregoing embodiment, the switching circuit 14 is used as the switching means for supplying the voice of the interpreter C to either one of the interpretee A and the conversation partner B which is designated from the interpreter terminal 2. Nevertheless, attenuator circuits for suppressing the supply of the voice signal to the unnecessary side may be used instead of the switch. In this case, the supply of the voice signal to the unnecessary side may be attenuated to some audible level, not being shut off completely. This allows the interpretee or the conversation partner to speak while checking that his/her own voice is being interpreted for the other party by the interpreter.

The foregoing embodiment has dealt with the case where the synthesis circuit 12 simply synthesizes the voice signals input from the two headset connection jacks 16 and 17, and outputs the resultant to the telephone connection jack 18. However, the two voice signals may be multiplexed. Suppose, for example, that the voice signal from the headset 16 and the voice signal from the headset 17 are stereophonically synthesized as the left channel and the right channel, respectively. Then, if the telephone terminal 2 to be used by the interpreter C has a voice demultiplexing function, the voice of the interpretee A and the voice of the conversation partner B are heard from the left and the right of the headset 2C, respectively. This makes it possible to clearly recognize which voice is which, and to designate the destination of interpretation without fail. This allows quicker and more precise interpretation.

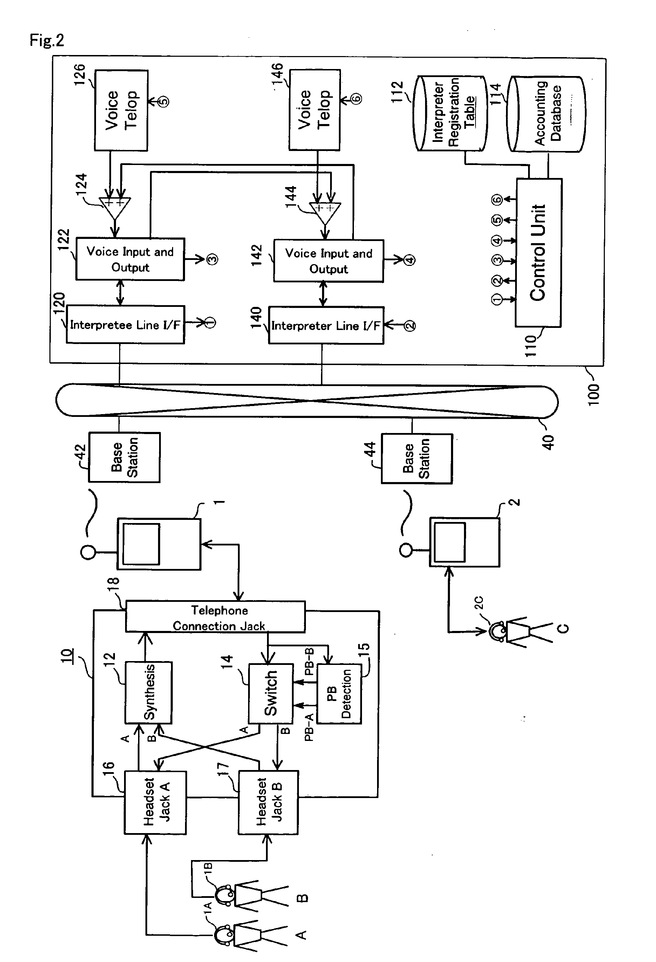

Fig. 2 shows an example of system configuration of the telephone interpretation system for providing interpretation services by using the telephone interpretation assistance device according to the first embodiment of the present invention. In the diagram, the reference numeral 100 designates the telephone interpretation system which is installed in an interpretation center for providing interpretation services. The telephone interpretation system 100 connects a telephone terminal 1 to be used by the interpretee (hereinafter, referred to as interpretee terminal) and a telephone terminal 2 to be used by the interpreter (hereinafter, referred to as interpreter terminal) via public telephone lines 40. The telephone interpretation system 100 thus provides telephone interpretation services by having the interpreter interpret a meeting between the interpretee and his/her conversation partner by telephone.

The telephone interpretation system 100 comprises an interpretee terminal line interface (hereinafter, "interface" will be abbreviated as I/F) 120 and an interpreter terminal line I/F 140 for establishing connection with the interpretee terminal and the interpreter terminal, respectively. The line I/Fs are connected with voice input and output units 122 and 142 for inputting and outputting voices to/from the respective terminals.

The voice input of the interpretee terminal voice input and output unit 122 is connected with a voice synthesis unit 124 for synthesizing the voice output of the interpreter terminal voice input and output unit 142 and the voice output of an interpretee terminal voice telop memory 126. The voice input of the interpreter terminal voice input and output unit 142 is connected with a voice synthesis unit 144 for synthesizing the voice output of the interpretee terminal voice input and output unit 122 and the voice output of an interpreter terminal voice telop memory 146.

The telephone interpretation system 100 includes a control unit 110 having an interpreter registration table 112 into which the terminal numbers of interpreter terminals to be used by interpreters are registered. The control unit 110 is connected with each of the line I/Fs 120 and 140, the voice input and output units 122 and 142, the voice synthesis units 124 and 144, and the telop memories 126 and 146. The telephone interpretation system 100 provides functions for connecting the interpretee terminal, the interpreter terminal. The functions include: accepting a call from the interpretee terminal; acquiring the language type of the interpretee and the language type of his/her conversation partner; acquiring an interpreter selection condition; extracting the terminal number of the interpreter by referencing the interpreter registration table 112 based on the language types and the selection condition acquired; calling the interpreter terminal by using the terminal number extracted.

The inputs of the voice synthesis units 124 and 144 are connected with the interpretee terminal voice telop memory 126, the interpreter terminal voice telop memory 146 respectively. The contents of the voice telop memories 126 and 146 can be set by the control unit 110. Consequently, when holding a telephone conversation through an interpreter, it is possible to transmit necessary voice messages to the individual terminals and establish a telephone connection by setting the voice telop memories 126 and 146 with messages for the respective terminals.

Next, description will be given of the connection processing by the control unit 110 for holding a telephone conversation through an interpreter.

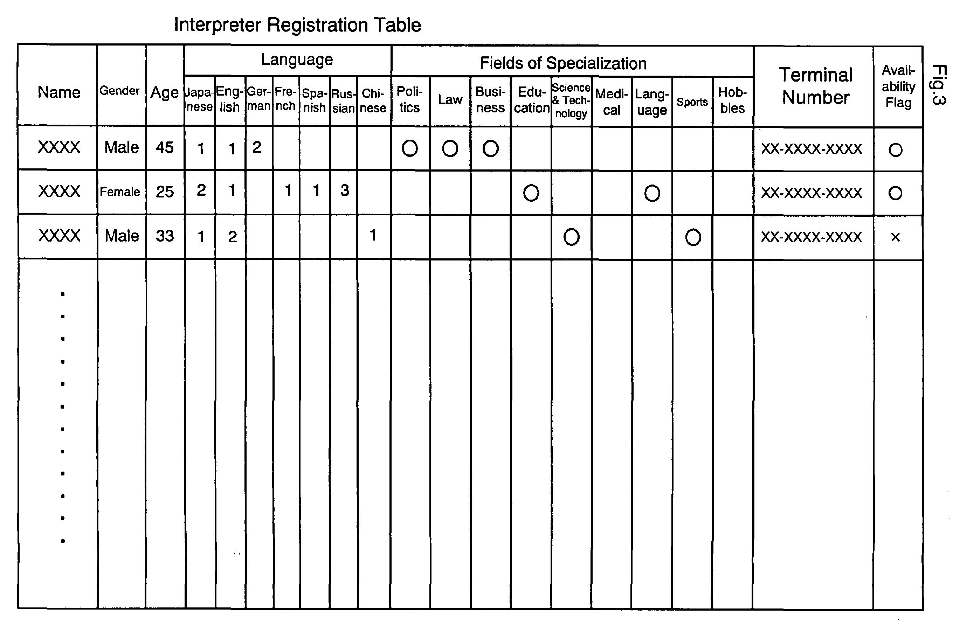

Prior to the processing, interpreter selection information and the terminal numbers of the terminals to be used by respective interpreters are registered into the interpreter registration table 112 of the control unit 110 from an appropriate terminal (not shown). Fig. 3 shows examples of entry items to be registered into the interpreter registration table 112. The interpreter selection information is information for selecting interpreters desired by users, and includes such entries as gender, age, language capabilities, residence, and the fields of specialization. For language capabilities, the language-specific levels of the interpreters are registered so that the users can select interpreters of desired levels in both intended languages. Here, the advanced, intermediate, and primary levels of interpretation are expressed as 1, 2, and 3, respectively. The entries on the residence are made on the assumption that some users may desire persons who have geographic knowledge on certain areas. Zip code is used here for area specification. The entries on the fields of specialization are made on the assumption that some users may desire persons who have specialized knowledge on a field or are well informed in topics of the field when the conversation will deal with the field of specialization. Here, the specialized fields of the interpreters can be registered in such subsections as politics, law, business, education, science and technology, medical, linguistics, sports, and hobbies. Since the fields of specialization range widely, hierarchical entries may be made in advance so that the entries are searched into levels desired by users at the time of selection.

Alternatively, qualifications possessed by the individual interpreters may be registered so that interpreters who carry qualifications desired by the users can be selected.

For the terminal numbers, the telephone numbers of the terminals are registered since the target terminals are telephone terminals to be connected to public telephone lines.

The interpreter registration table 112 also contains availability flags for indicating whether the corresponding interpreters are available or not. Registered interpreters can call the interpretation center from their own terminals and input commands from their dial pads to set or reset their availability flags. Consequently, the registered interpreters can avoid unnecessary calls by setting their availability flags in the interpreter registration table only when they are available. The users can also select available interpreters quickly.

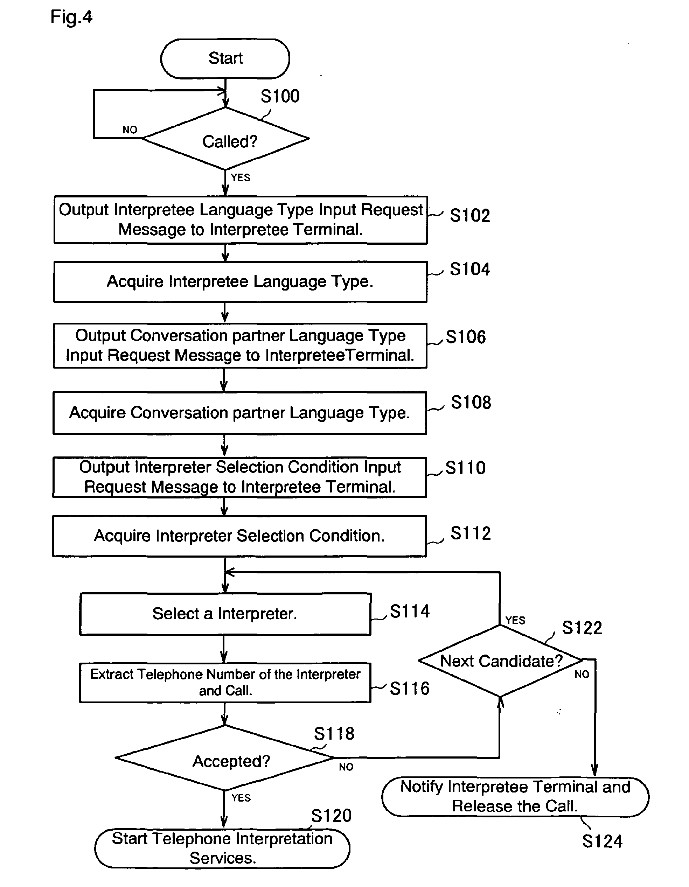

Fig. 4 shows the process flow of the connection processing by the control unit 110. The telephone interpretation system 100 accepts an order for interpretation services when the interpretee calls the telephone number of the interpretee terminal line I/F. The telephone interpretation system 100 then calls an interpreter terminal, and establishes connection for the telephone interpretation services.

As shown in the chart, the presence of a call to the interpretee terminal line I/F 120 is detected initially (S100). When a call is detected, a message for requesting to input the language type of the interpretee is output to the interpretee terminal (S102). This is effected by setting the intepretee voice telop memory 126 with voice messages such as "If you speak Japanese, please press 1#" (in Japanese), "If you speak English, please press 2#", ... . Subsequent messages to the interpretee terminal and the interpreter terminal will be given in the acquired language type of the interpretee. The language type of the interpretee, input by the interpretee in response, is acquired thus (S104).

Next, a message for requesting to input the language type of the conversation partner is output to the interpretee terminal (S106). For example, if the interpretee is a Japanese, the message is given by setting the interpretee voice telop memory 126 with voice messages such as "If the language of the conversation partner is English, press 1#. If German, press 2#. ..." (in Japanese). The language type of the conversation partner, input by the interpretee in response, is acquired thus (S108).

Now, a message for requesting to input an interpreter selection condition is output to the interpretee terminal (S110). This is effected by setting the interpretee voice telop memory 126 with voice messages such as "If a male interpreter is desired, press 1#. If female, press 2#. If do not care, press 0#", "If an interpreter under the age of 20 is desired, press 1#. For 20 to 39, press 2#. For 40 and above, 3#. If do not care, press 0#", "If any area specification is desired, press zip code and #. If not, press 0#", "To specify the fields of specialization, press 1 for politics, 2 for law, 3 for business, 4 for education, 5 for science and technology, ... . Press # in conclusion", and "To specify interpretation level, press 1# for advanced, 2# for intermediate, and 3# for primary. If do not care, press 0#". The interpreter selection condition input by the interpretee in response is acquired thus (S112).

Next, the interpreter registration table 112 is referred to select an interpreter who has the specified interpretation level in the language of the interpretee and the language of his/her conversation partner, matches with the acquired selection condition including gender, age, residence, and/or the fields of specialization, and has his/her availability flag set (S114). Here, registration information on the selected interpreter may be notified via a voice message so that the interpretee makes a final selection on the interpreter. In addition, the hourly rate (to be described later) of the interpreter, registered in the interpreter registration table 112, may be notified via a voice message. This allows the users to select appropriate interpreters in consideration of the fees necessary for the interpretation services.

Next, the terminal number of the selected interpreter is extracted from the interpreter registration table 112 and called (S116). Here, the interpreter terminal may be notified of personal information on the interpretee, the language types of the interpretee and his/her conversation partner, the interpreter selection condition, and the like by using the interpreter terminal voice telop memory146. Whether or not to accept the request for interpretation can be checked in this way. For example, the personal information on the interpretee may be member information registered in advance, provided that the interpretation services are offered on a membership basis.

When the interpreter terminal has accepted the call (S118), the telephone interpretation services are started (S120).

In case the selected interpreter terminal does not accept the call in S118, whether a next candidate is available is determined (S122). In case a next candidate is available, the processing returns to S114 to repeat. Otherwise interpretee terminal is notified as such and the call is released (S124).

The control unit 110 has a timer (not shown) for calculating the fee for interpretation services. The timer measures the time from the beginning of a connection to the disconnection. The interpreter registration table 112 contains entries on the hourly rates of the interpreters (not shown). At the end of interpretation services, the fee is calculated from the time measured by the timer and the hourly rates registered in the interpreter registration table 113. The calculated fee is registered into an accounting database 114, and charged to the user later.

Incidentally, the hourly rates of the interpreters may be determined from the interpretation levels registered in the interpreter registration table 112, by referencing an accounting table provided separately. Here, the accounting table shall define the relationship between the interpretation levels of the interpreters and the hourly rates.

The foregoing embodiment has dealt with the case where if the interpreter terminal selected does not accept the call, an appropriate message is simply posted to the interpretee before disconnection. Nevertheless, an interpretation reservation table for registering the terminal number of the interpretee may be provided so that the interpretee terminal can be notified to start the telephone interpretation service when the selected interpreter has accepted the call.

The foregoing embodiment has dealt with the case where the interpretee enters the language type of the interpretee and the language type of his/her conversation partner for the sake of selecting an interpreter. Nevertheless, the language type of the interpretee or his/her conversation partner may be acquired automatically by providing the interpretation center with telephone numbers for respective intepretee languages or respective combinations of interpretee languages and his/her conversation partner languages. The foregoing embodiment has also dealt with the case where the interpretee enters the interpreter selection condition for the sake of selecting an interpreter. Nevertheless, whether or not to specify the interpreter selection condition may be inquired initially. If not to specify, an interpreter may be selected based on the entered language types alone.

Moreover, in emergency situations, an interpreter in charge of emergency response may be called automatically by the interpretee pressing certain dial numbers initially.

The foregoing embodiment has dealt with the case where the telephone interpretation system 100 is composed of the line I/Fs, the voice input and output units, the voice synthesis units, the control unit, and so on. Nevertheless, these components need not necessarily be configured as separate pieces of hardware. The functions of the units may be achieved in the form of software processing by using a computer.

The foregoing embodiment has dealt with the case where the interpreter terminal 2 is located outside the interpretation center as the interpretee terminal 1 is, and provides interpretation services when called from the interpretation center via the public telephone lines. However, the present invention is not limited thereto. It is understood that some or all of interpreter terminals may be installed in the interpretation center so that interpretation services are provided from the interpretation center.

Incidentally, in the foregoing embodiment, the interpreters can participate interpretation services from anywhere as long as they have terminals capable of connection with public telephone lines. The interpreters can thus make effective use of their unoccupied hours to provide interpretation services by using the availability flags mentioned above. This allows efficient and stable operation of interpretation services which often have difficulty in securing necessary personnel.

The foregoing embodiment has dealt with the case where an interpreter is in charge of both interpreting the language of the conversation partner into the language of the interpretee and interpreting the language of the interpretee into the language of the conversation partner. Nevertheless, a first interpreter for interpreting the language of the conversation partner into the language of the interpretee and a second interpreter for interpreting the language of the interpretee into the language of the conversation partner may be selected individually to perform bidirectional simultaneous interpretation.

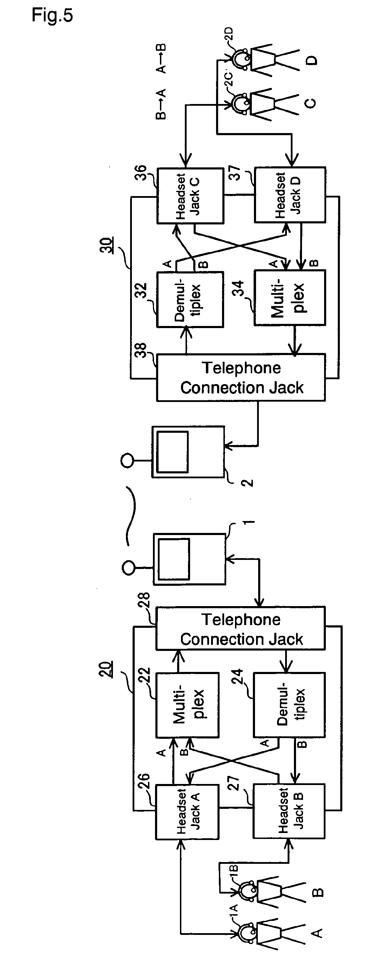

Fig. 5 is a block diagram showing a telephone interpretation assistance device according to a second embodiment of the present invention for achieving bidirectional simultaneous interpretation. In the diagram, the reference numeral 20 designates an interpretee-side telephone interpretation assistance device to be used on the interpretee side. The interpretee-side telephone interpretation assistance device 20 has a headset connection jack 26 to which a headset to be used by an interpretee A is connected, a head set connection jack 27 to which a headset to be used by a conversation partner B is connected, and a telephone connection jack 28 to which a telephone terminal 1 for holding a call with interpreters is connected. The device further comprises a multiplexer circuit 22 which multiplexes a voice signal input from the headset connection jack 26 as the first channel and a voice signal input from the headset connection jack 27 as the second channel, and outputs the resultant to the telephone connection jack 28, and a demultiplexer circuit 24 which demultiplexes a voice signal input from the telephone connection jack 28, and outputs the first channel of the resultant to the headset connection jack 26 and the second channel of the resultant to the headset connection jack 27.

Meanwhile, the reference numeral 30 designates an interpreter-side telephone interpretation assistance device to be used on the interpreter side. The interpreter-side telephone interpretation assistance device 30 has a headset connection jack 36 to which a headset to be used by a first interpreter C interpreting the language of the conversation partner B into the language of the interpretee A is connected, a headset connection jack 37 to which a headset to be used by a second interpreter D interpreting the language of the interpretee A into the language of the conversation partner B is connected, and a telephone connection jack 38 to which a telephone terminal 2 to be used by the interpreters is connected. The device further comprises a demultiplexer circuit 32 which demultiplexes a voice signal input from the telephone connection jack 38 and outputs the first channel of the resultant to the headset connection jack 37 and the second channel to the resultant to the headset connection jack 36, and a multiplexer circuit 34 which multiplexes a voice signal input from the headset connection jack 36 as the first channel and a voice signal input from the headset connection jack 37 as the second channel, and outputs the resultant to the telephone connection jack 38.

Consequently, the voice of the interpretee A is transmitted to the second interpreter D, the voice of the second interpreter D to the conversation partner B, the voice of the conversation partner B to the first interpreter C, and the voice of the first interpreter C to the interpretee A.

Consequently, the first interpreter C can listen to the speech of the conversation partner B and conduct simultaneous interpretation without interrupting the speech of the conversation partner B. The second interpreter can listen to the speech of the interpretee A and conduct simultaneous interpretation without interrupting the speech of the interpretee A. Unnecessary voices are not transmitted to even the interpreters. It is therefore possible to avoid a mix-up in conversation, allowing quick and precise bidirectional simultaneous interpretation.

The foregoing embodiment has dealt with the case where the first interpreter listens only to the voice of the conversation partner for interpretation, and the second interpreter listens only to the voice of the interpretee for interpretation. Nevertheless, the headsets 2C and 2D to be used by the interpreters may be of stereo earphone type so that the first channel and the second channel separated by the demultiplexer circuit 32 are output to both the headset connection jacks 36 and 37. Consequently, each of the interpreters can listen to the voices of both the interpretee and the conversation partner from the stereo earphones separately, and conduct interpretation while checking the progress of the entire conversation and the reaction of the targets of interpretation.

Moreover, in the demultiplexer circuit 32, the first channel may be attenuated and added to the second cannel which is to be supplied to the headset connection jack 36. The second channel may be attenuated and added to the first channel which is to be supplied to the headset connection jack 37. As a result, even if the headsets 2C and 2D are not of stereo earphone type, the interpreters can listen not only to the speeches of the respective intended speakers to interpret but also to the speeches of the targets of interpretation. It is therefore possible to conduct interpretation while checking the progress of the entire conversation and the reactions of the targets of interpretation.

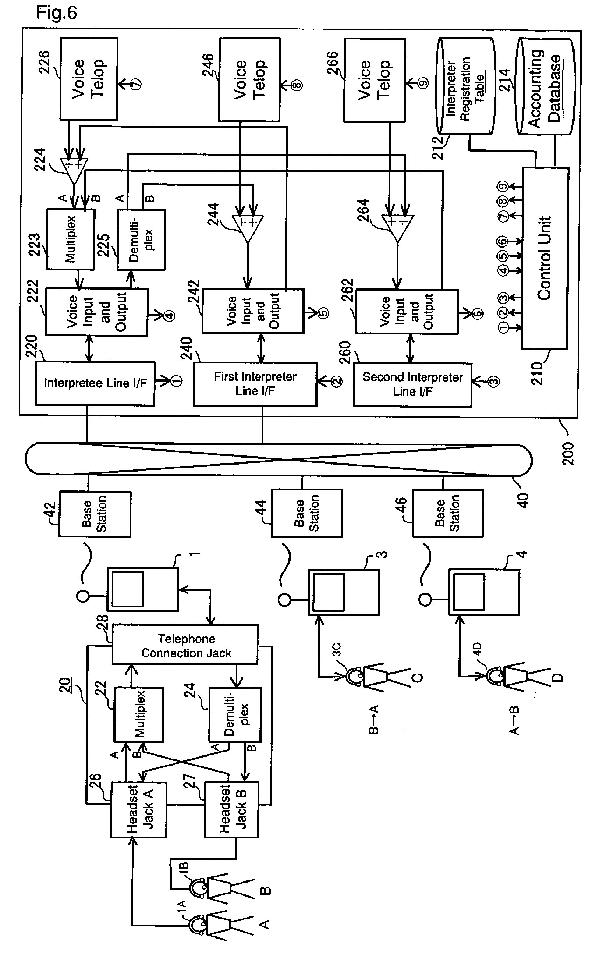

Fig. 6 shows an example of system configuration of the telephone interpretation system for providing interpretation services by using the interpretee-side telephone interpretation assistance device 20 out of the telephone interpretation assistance device according to the second embodiment of the present invention. In the diagram, the reference numeral 200 designates the telephone interpretation system which is installed in an interpretation center for providing bidirectional simultaneous interpretation services. The telephone interpretation system 200 connects a telephone terminal 1 to be used by the interpretee (hereinafter, referred to as interpretee terminal), a telephone terminal 3 to be used by the first interpreter (hereinafter, referred to as first interpreter terminal), and a telephone terminal 4 to be used by the second interpreter (hereinafter, referred to as second interpreter terminal) via public telephone lines 40. The telephone interpretation system 200 thus provides telephone interpretation services by having the first and second interpreters conduct bidirectional simultaneous interpretation of a meeting between the interpretee and the conversation partner by telephone.

The telephone interpretation system 200 has an interpretee terminal line I/F 220, a first interpreter terminal line I/F 240, and a second interpreter terminal line I/F 260. The line I/Fs are connected with voice input and output units 222, 242, and 262 for inputting and outputting voices to/from the respective terminals.

The voice input of the interpretee terminal voice input and output unit 222 is connected with a multiplexer unit 223. The multiplexer unit 223 multiplexes the voice output of a voice synthesis unit 224 as the first channel (A) and the voice output of the second interpreter terminal voice input and output unit 262 as the second channel (B). The voice synthesis unit 224 synthesizes the voice output of the first interpreter terminal voice input and output unit 242 and the voice output of an interpretee terminal voice telop memory 226.

The voice input of the first interpreter terminal voice input and output unit 242 is connected with a voice synthesis unit 244. The voice synthesis unit 244 synthesizes the second channel output (B) of a demultiplexer unit 225 and the voice output of a first interpreter terminal voice telop memory 246. The demultiplexer unit 225 demultiplexes the voice output of the interpretee terminal voice input and output unit 222. The voice input of the second interpreter terminal voice input and output unit 262 is connected with a voice synthesis unit 264. The voice synthesis unit 264 synthesizes the first channel output (A) of the demultiplexer unit 225 and the voice output of a second interpreter terminal voice telop memory 266.

Consequently, the voice of the interpretee A is transmitted to the second interpreter D, the voice of the second interpreter D to the conversation partner B, the voice of the conversation partner B to the first interpreter C, and the voice of the first interpreter C to the interpretee A.

Consequently, the first interpreter C can listen to the speech of the conversation partner B and conduct simultaneous interpretation without interrupting the speech of the conversation partner B. The second interpreter can listen to the speech of the interpretee A and conduct simultaneous interpretation without interrupting the speech of the interpretee A. Unnecessary voices are not transmitted to even the interpreters. It is therefore possible to avoid a mix-up in conversation, allowing quick and precise bidirectional simultaneous interpretation.

The foregoing embodiment has dealt with the case where the first interpreter listens only to and interprets the voice of the conversation partner, and the second interpreter listens only to and interprets the voice of the interpretee. Nevertheless, the voice of the interpretee and the voice of the second interpreter may be attenuated and added to the voice to be transmitted to the first interpreter, or multiplexed into the same, for transmission. The voice of the conversation partner and the voice of the first interpreter may be attenuated and added to the voice to be transmitted to the second interpreter, or multiplexed into the same, for transmission. In this case, as mentioned above, the interpreters can conduct interpretation while checking the progress of the entire conversation and reactions of the other parties of interpretation.

The telephone interpretation system 200 includes a control unit 210 having an interpreter registration table 112 into which the terminal numbers of interpreter terminals to be used by interpreters are registered. The control unit 210 is connected with each of the line I/Fs 220, 240 and 260, the voice input and output units 222, 242 and 262, the voice synthesis units 224, 244 and 264, and the telop memories 226, 246 and 266. The control unit 210 provides functions for connecting the intepretee terminal, the first interpreter terminal, and the second interpreter terminal. The functions include: accepting a call from the interpretee terminal; acquiring the language type of the interpretee and the language type of his/her conversation partner; acquiring an interpreter selection condition; extracting the terminal numbers of the first and second interpreters by referencing the interpreter registration table 212 based on the language types and the selection condition acquired; calling the first interpreter terminal and the second interpreter terminal by using the terminal numbers extracted.

The inputs of the voice synthesis units 224, 244 and 264 are connected with the interpretee terminal voice telop memory 226, the first interpreter terminal voice telop memory 246, and the second interpreter terminal voice telop memory 266, respectively. The contents of the voice telop memories 226, 246 and 266 are set by the control unit 210. Consequently, when holding a telephone conversation through interpreters, it is possible to output necessary voice messages to the individual terminals and establish a three-party call by setting the voice telop memories 226, 246 and 266 with messages for the respective terminals.

Next, description will be given of the connection processing by the control unit 210 for holding a telephone conversation with bidirectional simultaneous interpretation.

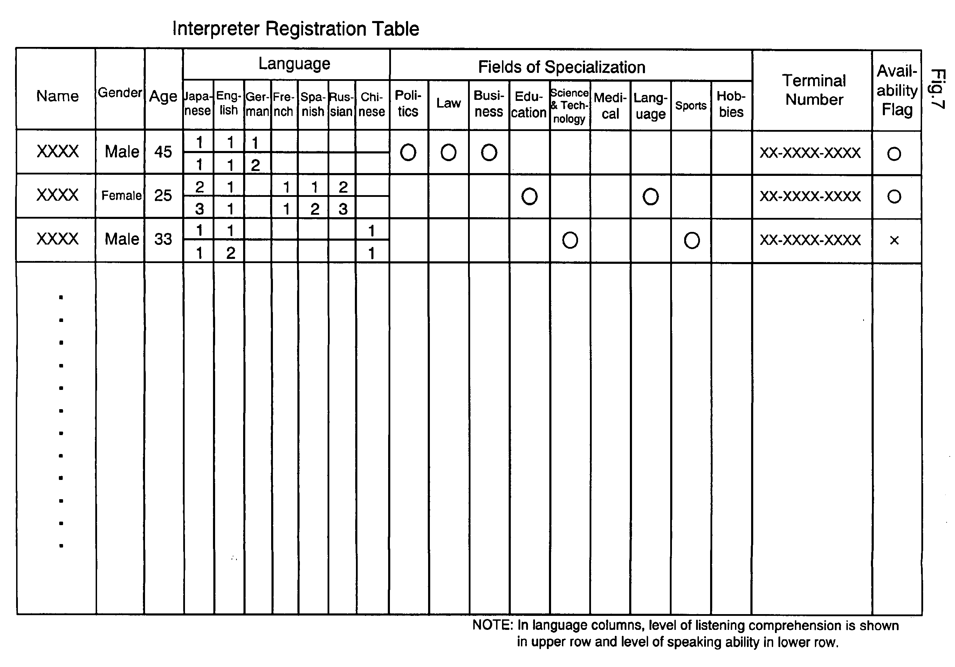

Again, the interpreter selection information and the terminal numbers of terminals to be used by the respective interpreters are registered into the interpreter registration table 212 of the control unit 210 from an appropriate terminal (not shown) before the processing. Fig. 7 shows examples of entry items to be registered into the interpreter registration table 212. As shown in the chart, the entry items to be registered into the interpreter registration table 212 are equivalent to those of the interpreter registration table 112 shown in Fig. 3. For language capabilities, however, the levels of listening comprehension and the levels of speaking abilities are registered separately. Consequently, interpreters the most suitable for the first interpreter who interprets the language of the conversation partner into the language of the interpretee and the second interpreter who interprets the language of the interpretee into the language of the conversation partner can be selected individually.

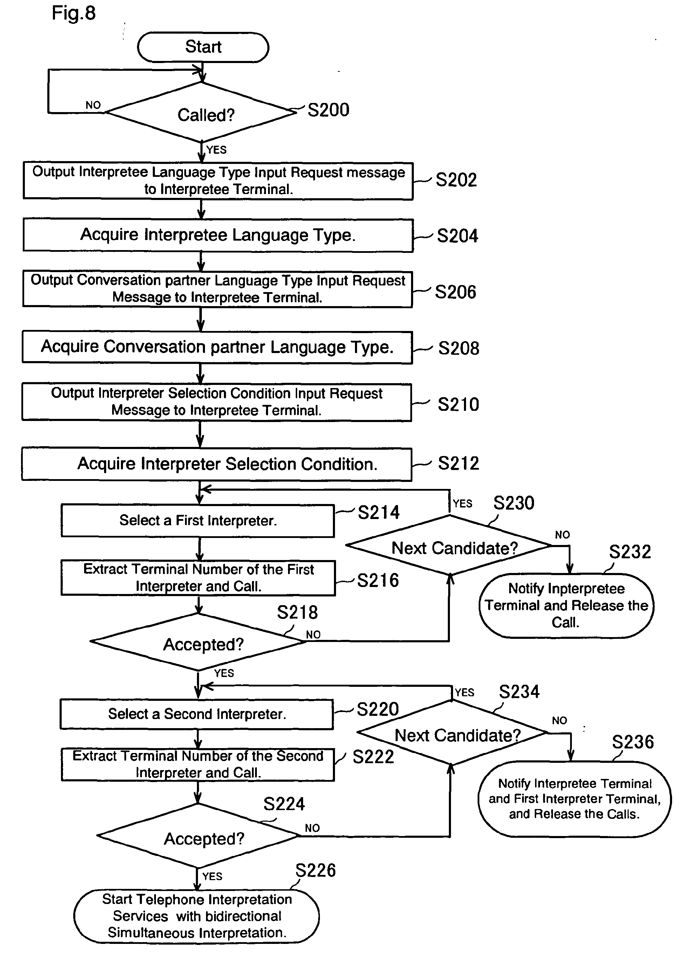

Fig. 8 shows the process flow of the connection processing by the control unit 210. The telephone interpretation system 200 accepts an order for interpretation services when the interpretee calls the telephone number of the interpretee terminal line I/F. The telephone interpretation system 200 then calls a first interpreter terminal, a second interpreter terminal, and establishes connection for the bidirectional simultaneous telephone interpretation services.

As shown in the chart, the presence of a call to the interpretee terminal line I/F 220 is detected initially (S200). When a call is detected, a message for requesting to input the language type of the interpretee is output to the interpretee terminal (S202) as in the first embodiment. The language type of the interpretee, input by the interpretee in response, is acquired thus (S204). Next, a message for requesting to input the language type of the conversation partner is output to the interpretee terminal by using the acquired language type of the interpretee (S206) as in the first embodiment. The language type of the conversation partner, input by the interpreter in response, is acquired thus (S208). Next, a message for requesting to input an interpreter selection condition is output to the interpretee terminal (S210) as in the first embodiment. The interpreter selection condition input by the interpretee in response is acquired thus (S212).

Next, the interpreter registration table 212 is referred to select a first interpreter (S214). Here, the first interpreter shall have the specified interpretation levels, or a level of listening comprehension in the language of the conversation partner and a level of speaking ability in the language of the interpretee, match with the acquired selection condition including gender, age, residence, and the fields of specialization, and have his/her availability flag set. The terminal number of the selected interpreter is extracted and called (S216).

When the first interpreter terminal has accepted the call (S218), the interpreter registration table 212 is referred to select a second interpreter (S220). The second interpreter shall have the specified interpretation levels, or a level of listening comprehension in the language of the interpretee and a level of speaking ability in the language of the conversation partner, match with the acquired selection condition including gender, age, residence, and the fields of specialization, and have his/her availability flag set. The terminal number of the selected interpreter is extracted and called (S222).

When the second interpreter terminal has accepted the call (S224), the telephone interpretation services with bidirectional simultaneous interpretation are started (S226).

In case the first interpreter terminal does not accept the call in S218, whether a next candidate is available is determined (S230). In case a next candidate is available, the processing returns to S214 to repeat. Otherwise, the interpretee terminal is notified as such and the call is released (S232). In case the second interpreter terminal does not accept the call in S224, whether a next candidate is available is determined (S234). In case a next candidate is available, the processing returns to S220 to repeat. Otherwise, the interpretee terminal and the first interpreter terminal are notified as such and the calls are released (S235).

For the sake of simplicity, the selection of the first interpreter (S214) and the selection of the second interpreter (S220) have been described for situations where the interpreter registration table 212 is referred to select interpreters who match with the predetermined condition. Nevertheless, as in the first embodiment, the registered information on the appropriate interpreters may be notified via voice messages so that the interpretee makes final selections on both the first and second interpreters.

The control unit 210 has a timer (not shown) for calculating the fee for interpretation services. The timer measures the time from the beginning of a connection to the disconnection. The interpreter registration table 212 contains entries on the hourly rates of the interpreters (not shown). At the end of interpretation services, the fee is calculated from the time measured by the timer and the hourly rates of the first and second interpreters registered in the interpreter registration table 212. The calculated fee is registered into an accounting database 214, and charged to the user later.

Incidentally, the hourly rates of the interpreters may be determined from the interpretation levels registered in the interpreter registration table 212, by referencing an accounting table provided separately. Here, the accounting table shall define the relationship between the interpretation levels of the interpreters and the hourly rates.

The foregoing embodiment has dealt with the case where if the selected interpreter terminals do not accept the call, an appropriate message is simply posted to the interpretee before disconnection. Nevertheless, an interpretation reservation table for registering the terminal number of the interpretee may be provided so that the interpretee can be notified to start the telephone interpretation service when both the selected first and second interpreters answer.

The foregoing embodiment has dealt with the case where the telephone interpretation system 200 is composed of the line I/Fs, the voice input and output units, the voice synthesis units, the control unit, and so on. Nevertheless, these components need not necessarily be configured as separate pieces of hardware. The functions of the units may be achieved in the form of software processing by using a computer.

The foregoing embodiment has dealt with the case where the first interpreter terminal 3 and the second interpreter terminal 4 are located outside the interpretation center as the interpretee terminal 1 is, and provide interpretation services when called from the interpretation center via the public telephone lines. However, the present invention is not limited thereto. It is understood that some or all of interpreter terminals may be installed in the interpretation center so that interpretation services are provided from the interpretation center.

Incidentally, in the foregoing embodiment, the interpreters can participate interpretation services from anywhere as long as they have terminals capable of connection with public telephone lines. The interpreters can thus make effective use of their unoccupied hours to provide interpretation services by using the availability flags mentioned above. This allows efficient and stable operation of interpretation services which often have difficulty in securing necessary personnel.

Finally, description will be given of a recording and reproducing function for recording voices during telephone interpretation services, and reproducing and transmitting the same by user requests.

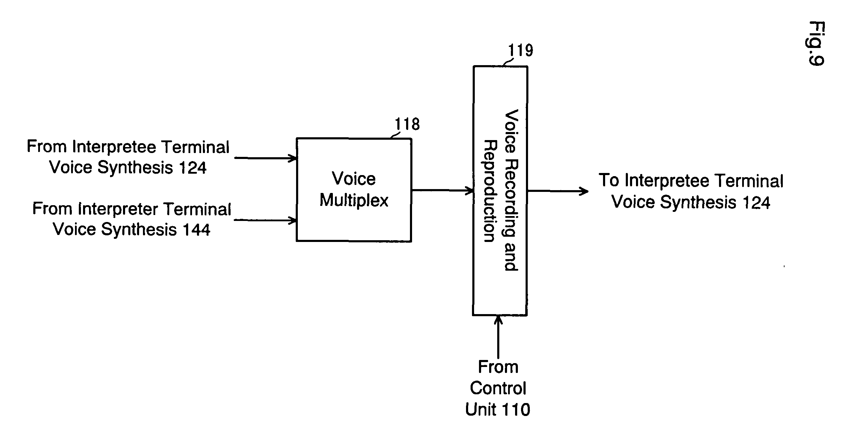

Fig. 9 shows a practical example of the recording and reproducing function in the telephone communication system in Fig.2. As shown in the diagram, the voice output of the voice synthesis unit 124 to be transmitted to the interpretee terminal and the voice output of the voice synthesis unit 144 to be transmitted to the interpreter terminal are multiplexed as the left channel and the right channel, respectively, by a voice multiplexing unit 118. The resultant is transmitted to a voice recording and reproducing unit 119.

During interpretation services, the voice output of the voice multiplexing unit 118 is automatically recorded by the voice recording and reproducing unit 119 at a command from the control unit 110, and is stored user by user. The voices stored in the voice recording and reproducing unit 119 are reproduced by a command from the control unit 110 when the voice input and output unit 122 detects that predetermined dial numbers are pressed from the interpretee terminal. The reproduced voices are transmitted to each terminal via the voice synthesis unit 124 of the detected terminal.

Consequently, if the user terminals have a voice demultiplexing function, the voices of the respective terminals during interpretation services can be checked in the language of the interpretee on the left channel and in the language of the interpreter on the right channel. Incidentally, users can also reproduce and check the voices stored in the voice recording and reproducing unit 119 afterward by calling the interpretation center and inputting predetermined access code from their terminals.

Incidentally, the method of synthesizing the voices to be recorded into the voice recording and reproducing unit is not limited to the foregoing one. Any kind of method may be used as long as the users can check the details of the interpretation services. Since some user terminals do not have the voice demultiplexing function, the voices to be transmitted to the interpretee terminal and the voices to be transmitted to the interpreter terminal may be recorded separately. In this case, either one of the voices designated from a terminal can be reproduced for transmission.

Moreover, when the synthesis circuit 12 of the telephone interpretation assistance device 10 is capable of multiplexing as described above, there may be provided a demultiplexing unit for separating the voice output of the interpretee terminal voice input and output unit 122 into the voice of the interpretee and the voice of the conversation partner. Here, a switching unit and a PB detection unit equivalent to the switching circuit 14 and the PB detection circuit 15 in the telephone interpretation assistance device 10 are provided so that the destination of the voice of the interpreter is switched between the interpretee and the conversation partner. The interpretee voice output from the demultiplexing unit and the interpretee-bound voice output from the switching unit are synthesized as the left channel, and the conversation partner voice output from the demultiplexing unit and the partner-bound voice output from the switching unit are synthesized as the right channel. The left and right channels are then multiplexed by the voice multiplexing unit 118 and recorded into the voice recording and reproducing unit 119.

Consequently, if the user terminals have a voice demultiplexing function, the voices of the respective terminals during interpretation services can be checked in the language of the interpretee on the left channel and in the language of the conversation partner on the right channel.

The users may include persons other than those who have received the interpretation services. The voices stored in the voice recording and reproducing unit 119 may also be reproduced and transmitted when access-authorized persons call the interpretation center by using their telephone terminals and input predetermined access code.

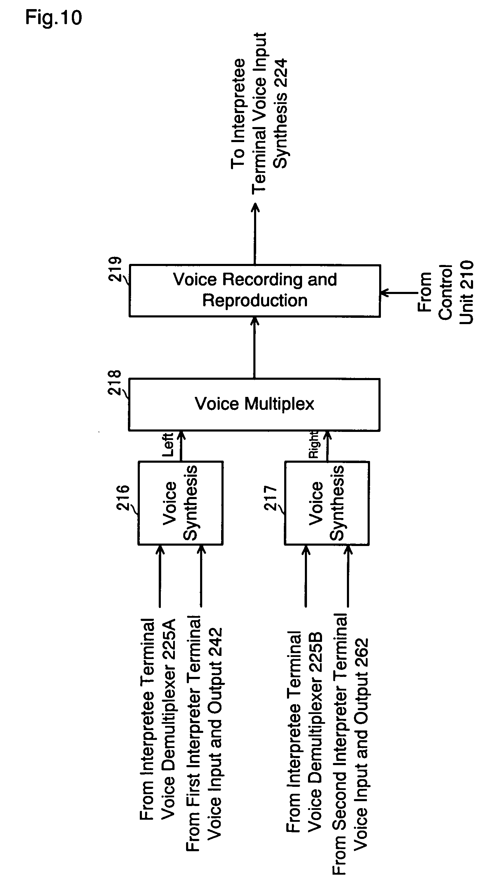

Fig. 10 shows a practical example of the recording and reproducing function in the telephone communication system with bidirectional simultaneous interpretation of Fig. 6. As shown in the diagram, the first channel output (A) of the interpretee terminal demultiplexing unit 225 and the voice output of the first interpreter terminal voice input and output unit 242 are synthesized by a voice synthesizer 216. The second channel output (B) of the interpretee terminal demultiplexing unit 225 and the voice output of the second interpreter terminal voice input and output unit 262 are synthesized by a voice synthesizer 217. The output voice of the voice synthesizer 216 and the output voice of the voice synthesizer 217 are multiplexed by the multiplexing unit 218 as the left channel and the right channel, respectively. The resultant is transmitted to a voice recording and reproducing unit 219.

During interpretation services, the voice output of the voice multiplexing unit 218 is automatically recorded by the voice recording and reproducing unit 219 at a command from the control unit 210, and is stored user by user. The voices stored in the voice recording and reproducing unit 219 are reproduced by a command from the control unit 210 when the voice input and output unit 222 detects that predetermined dial numbers are pressed from the interpretee terminal. The reproduced voices are transmitted to each terminal via the voice synthesis unit 224 of the detected terminal.

Consequently, if the user terminals have a voice demultiplexing function, the voices of the respective terminals during interpretation services can be checked in the language of the interpretee on the left channel and in the language of his/her conversation partner on the right channel. Incidentally, users can also reproduce and check the voices stored in the voice recording and reproducing unit 219 afterward by calling the interpretation center and inputting predetermined access code from their terminals.

Incidentally, the method of synthesizing the voices to be recorded into the voice recording and reproducing unit is not limited to the foregoing one. Any kind of method may be used as long as the users can check the details of the interpretation services. Since some user terminals do not have the voice demultiplexing function, the output voice of the voice synthesizer 216 and the output voice of the voice synthesizer 217 may be recorded separately. In this case, either one of the voices designated from a terminal can be reproduced for transmission.

The users may include persons other than those who have received the interpretation services. The voices stored in the voice recording and reproducing unit 219 may also be reproduced and transmitted when access-authorized persons call the interpretation center by using their telephone terminals and input predetermined access code.

The foregoing embodiments have dealt with the cases where the interpretee terminal and the interpreter terminal(s) use ordinary telephone terminals (especially cellular phones) to be connected to public telephone lines. Nevertheless, the present invention is not limited thereto. The present invention may also be applied to the cases where dedicated telephone terminals to be connected to dedicated lines are used, and where IP (Internet Protocol) type telephone terminals to be connected to Internet lines are used. Even in these cases, similar telephone interpretation systems or similar telephone interpretation methods can be achieved to provide the effects of the present invention.

Moreover, the present invention may be applied to the function of transmitting and receiving voices in interpretation services that use videophone sets having an image and voice communication function. In this case, the interpretee and his/her conversation partner can see the images of the interpreters, and the interpreters can see the images of the interpretee and his or her conversation partner. This facilitates grasping the details of the interpretation, allowing the provision of quicker and more precise interpretation services.

### INDUSTRIAL APPLICABILITY

As has been described, the present invention provides the effect that in telephone interpretation when persons who speak different languages meet each other, the interpreter(s) can interpret the speech of a speaker in progress simultaneously without interrupting the speech of the speaker or mixing up the conversation, thereby allowing quick and precise interpretation.

## Claims

1. A telephone interpretation assistance device comprising:
headset connection jacks to which headsets to be used by an interpretee and a conversation partner who speak different languages are connected, respectively; a telephone connection jack to which a telephone terminal for holding a call with an interpreter is connected; synthesis means for synthesizing voice signals input from the respective headset connection jacks, and outputting the resultant to the telephone connection jack; detection means for detecting a switch signal from a voice signal input from the telephone connection jack; and switching means for outputting the voice signal input from the telephone connection jack to designated one of the headset connection jacks based on the switch signal detected by the detection means.

2. The telephone interpretation assistance device according to claim 1, wherein the synthesis means multiplexes the voice of the interpretee and the voice of the conversation partner.

3. A telephone interpretation system for providing a telephone interpretation service by using the telephone interpretation assistance device according to claim 1 or 2, comprising:
connecting means for connecting an interpretee terminal and an interpreter terminal; and communication means for conducting voice communications between the terminals connected by the
connecting means, wherein
the connecting means has an interpreter registration table containing at least the language types possible for interpreters to interpret and terminal numbers of the interpreters; and
the telephone interpretation system has functions of: accepting a call from the interpretee terminal; acquiring the language type of the interpretee and the language type of the conversation partner from the interpretee terminal of which the call is accepted; extracting the terminal number of an interpreter by referencing the interpreter registration table based on the language type of the interpretee and the language type of the conversation partner acquired; and calling the interpreter terminal by using the extracted terminal number of the interpreter.

4. The telephone interpretation system according to claim 3, wherein the communication means has functions of: recording the voice from the interpretee terminal and the voice from the interpreter terminal; and reproducing and transmitting the recorded voices by a request from the terminals.

5. A telephone interpretation assistance device for conducting telephone interpretation with bidirectional simultaneous interpretation, comprising an interpretee-side telephone interpretation assistance device and an interpreter-side telephone interpretation assistance device, wherein
the interpretee-side telephone interpretation assistance device comprises: an interpretee headset connection jack to which a headset to be used by an interpretee is connected; a conversation partner headset connection jack to which a headset to be used by a conversation partner is connected; a telephone connection jack to which a telephone terminal for holding a call with an interpreter is connected; multiplexing means for multiplexing a voice signal input from the interpretee headset connection jack and a voice signal input from the conversation partner headset connection jack as the first channel and the second signal, respectively, and outputting the resultant to the telephone connection jack; and demultiplexing means for demultiplexing a voice signal input from the telephone connection jack into the first channel and the second channel, and outputting the first and second channels to the interpretee headset connection jack and the conversation partner headset connection jack, respectively; and
the interpreter-side telephone interpretation assistance device comprises: a first interpreter headset connection jack to which a headset to be used by a first interpreter who interprets the language of the conversation partner into the language of the interpretee is connected; a second interpreter headset connection jack to which a headset to be used by a second interpreter who interprets the language of the interpretee into the language of the conversation partner is connected; a telephone connection jack to which a telephone terminal for holding a call with the interpretee is connected; demultiplexing means for demultiplexing a voice signal input from the telephone connection jack into the first channel and the second channel, and outputting the first and second channels to the second interpreter headset connection jack and the first interpreter headset connection jack, respectively; and multiplexing means for multiplexing a voice signal input from the first interpreter headset connection jack and a voice signal input from the second interpreter headset connection jack as the first channel and the second channel, respectively, and outputting the resultant to the telephone connection jack.

6. A telephone interpretation system for providing a bidirectional telephone interpretation service by using a interpretee-side telephone interpretation assistance device comprising: an interpretee headset connection jack to which a headset to be used by an interpretee is connected; a conversation partner headset connection jack to which a headset to be used by a conversation partner is connected; a telephone connection jack to which a telephone terminal for holding a call with an interpreter is connected; multiplexing mans for multiplexing a voice signal input from the interpretee headset connection jack and a voice signal input from the conversation partner headset connection jack as the first channel and the second channel, respectively, and outputting the resultant to the telephone connection jack; and demultiplexing means for demultiplexing a voice signal input from the telephone connection jack into the first channel and the second channel, and outputting the first and second channels to the interpretee headset connection jack and the conversation partner headset connection jack, respectively, wherein:
the telephone interpretation system comprises: connecting means for establishing connection among an interpretee terminal, a first interpreter terminal to be used by a first interpreter who interprets the language of the conversation partner into the language of the interpretee, and a second interpreter terminal to be used by a second interpreter who interprets the language of the interpretee into the language of the conversation partner; and communication means for conducting voice communications among the terminals connected by the connecting means; and
the communication means has a demultiplexing function of demultiplexing a voice signal from the interpretee terminal into the first channel and the second channel, and transmitting the first and second channels to the second interpreter terminal and the first interpreter terminal, respectively, and a multiplexing function of multiplexing a voice signal from the first interpreter terminal and a voice signal from the second interpreter terminal as the first channel and the second channel, respectively, and transmitting the resultant to the interpretee terminal.

7. The telephone interpretation system according to claim 6, wherein the connecting means has an interpreter registration table containing at least the language types possible for interpreters to interpret and terminal numbers of the interpreters, and the telephone interpretation system has functions of: accepting a call from the interpretee terminal; acquiring the language type of the interpretee and the language type of the conversation partner from the interpretee terminal of which the call is accepted; extracting the terminal number of the first interpreter by referencing the interpreter registration table based on the language type of the conversation partner and the language type of the interpretee acquired; calling the first interpreter terminal by using the extracted terminal number of the first interpreter; extracting the terminal number of the second interpreter by referencing the interpreter registration table based on the language type of the interpretee and the language type of the conversation partner acquired; and calling the second interpreter terminal by using the extracted terminal number of the second interpreter.

8. The telephone interpretation system according to claim 6 or 7, wherein the communication means has functions of: recording the voice from the interpretee terminal, the voice from the first interpreter terminal, and the voice from the second interpreter terminal; and reproducing and transmitting the recorded voices by a request from the terminals.

9. The telephone interpretation system according to any one of claims 3, 4, 7, and 8, wherein:
the interpreter registration table contains selection information for selecting interpreters; and
the connecting means has functions of acquiring an interpreter selection condition from the interpretee terminal, and extracting the terminal number of an appropriate interpreter by referencing the interpreter registration table based on the interpreter selection condition acquired.

10. The telephone interpretation system according to any one of claims 3, 4, 7, 8, and 9, wherein:
the interpreter registration table contains availability flags for indicating whether or not the interpreters are available; and
the connecting means has a function of extracting the terminal number of an available interpreter by referencing the availability flags in the interpreter registration table.

11. The telephone interpretation system according to any one of claims 3, 4, 7, 8, 9, and 10, wherein:
the interpreter registration table has a function of registering accounting information on the interpreters; and
the connecting means has functions of measuring the time for the interpretee terminal to receive interpretation services, and calculating fees from the measured time and the accounting information registered in the interpreter registration table.
